# EUROPÄISCHE PATENTSCHRIFT

(11) **EP 0 809 580 B1**
(45) Veröffentlichungstag und Bekanntmachung des Hinweises auf die Patenterteilung: **23.12.1998**
(21) Anmeldenummer: 95942640.4
(22) Anmeldetag: 15.12.1995
(51) Int. Cl.: B60R 16/02

(54) **EINRICHTUNG ZUM ÜBERTRAGEN ELEKTRISCHER SIGNALE ZWISCHEN GEGENEINANDER VERDREHBAREN BAUTEILEN**
DEVICE FOR TRANSMITTING ELECTRICAL SIGNALS BETWEEN COMPONENTS WHICH CAN BE ROTATED RELATIVE TO ONE ANOTHER
DISPOSITIF SERVANT A LA TRANSMISSION DE SIGNAUX ELECTRIQUES ENTRE DES COMPOSANTS POUVANT TOURNER L'UN PAR RAPPORT A L'AUTRE

(30) Priorität: 16.02.1995 DE 19506865
(43) Veröffentlichungstag der Anmeldung: 03.12.1997
(73) Patentinhaber: Petri AG, D-63743 Aschaffenburg (DE)
(72) Erfinder: ZAHN, Matthias, D-63811 Stockstadt (DE)
(74) Vertreter: Bärmann, Klaus, Dipl.-Ing.
(86) Internationale Anmeldenummer: DE9501839
(87) Internationale Veröffentlichungsnummer: WO9625307

(56) Entgegenhaltungen:
- DE-A- 4 111 699
- DE-A- 4 301 248
- FR-A- 2 667 457
- US-A- 5 328 112

## Beschreibung

Die Erfindung betrifft eine Einrichtung nach dem Oberbegriff des Anspruchs 1. Solche Übertragungseinrichtungen werden beispielsweise in Kraftfahrzeuglenkungen eingesetzt, um die Signale der am oder im Lenkrad angeordneten Funktionselemente zu übertragen.

In der DE-OS 35 37 783 ist eine Einrichtung zur Signalübertragung gezeigt, bei der eine elektrische Leitung an einem ortsfesten und einem drehbaren Bauteil angebracht ist. Zwischen dem ortsfesten und dem drehbaren Bauteil ist ein mit einer Aussparung versehener loser Führungsring angeordnet. Die elektrische Leitung ist zumindest teilweise um den Führungsring herum und durch die Aussparung des Führungsringes geführt und ist innerhalb des Führungsringes um das drehbare Bauteil wickelbar. Bei einer Drehung des drehbaren Bauteils wird der aufgewickelte Teil und der um den Führungsring geführte Teil der elektrischen Leitung jeweils verkürzt oder verlängert, so daß der Führungsring entsprechend der Bewegung der elektrischen Leitung gedreht wird. In der einen Extremstellung ist die elektrische Leitung auf dem drehbaren Bauteil aufgewickelt, in der anderen Extremstellung ist die elektrische Leitung abgewickelt und zwischen dem Führungsring und dem ortsfesten Bauteil geführt.

Die in der DE-OS 35 37 783 beschriebene Einrichtung zur Signalübertragung besitzt den Nachteil, daß die mögliche Drehbewegung verglichen mit der Länge der elektrischen Leitung gering ist.

Um den Drehbereich für eine Einrichtung zur Signalübertragung zu vergrößern, ist aus der EP-0 186 935 bekannt, eine elektrische Leitung in einem Raum zwischen einer drehbaren Habe und einer festen Gehäusewand zu führen. Dabei ist die elektrische Leitung bei einer Drehung der Nabe in Uhrzeigerrichtung in der Endstellung vollständig von der Nabe abgewickelt und liegt zu einem Teil an der Innenwand des feststehenden Gehäuses an oder befindet sich in dem Raum zwischen der Nabe und dem feststehenden Gehäuse. Bei Drehung der Nabe entgegen der Uhrzeigerrichtung ist die elektrische Leitung in der Endstellung der Nabe vollständig auf dieser aufgewickelt. In der Mittelstellung ist die elektrische Leitung teilweise auf der Nabe aufgewickelt.

Bei der letztgenannten Leiteranordnung ist zwar der Drehbereich gegenüber der vorher genannten Anordnung größer. Hierbei besteht aber der Nachteil, daß eine große Leitunglänge erforderlich ist.

Weiterhin ist aus der DE-A-4 111 699 eine Übertragungsvorrichtung bekannt, bei der die effektive Länge eines flexiblen elektrischen Leiters verringert ist, ohne daß die Zahl der Umdrehungen des Rotors vermindert werden muß. Erreicht wird das durch ein im Raum zwischen dem Rotor und einem feststehenden Gehäuse angeordnetes Zwischenglied, das in derselben Richtung und synchron mit dem Rotor umläuft, und auf dem eine Führungsrolle drehbar gelagert ist.

Der Erfindung liegt daher die Aufgabe zugrunde, eine Einrichtung zum Übertragen elektrischer Signale zwischen gegeneinander verdrehbaren Bauteilen zu schaffen, bei der die notwendige Länge der elektrischen Leitung für einen vorgegebenen Drehbereich gegenüber bisher bekannten Lösungen verringert wird.

Diese Aufgabe wird erfindungsgemäß durch den kennzeichnenden Teil des Anspruchs 1 gelöst.

Bei der Einrichtung zur Übertragung elektrischer Signale gemäß der Erfindung sind die elektrischen Leitungsanschlüsse und die Führung der elektrischen Leitung so ausgeführt, daß die elektrische Leitung in den beiden Endlagen der Nabe bei Drehung der Nabe in Uhrzeigerrichtung bzw. entgegen der Uhrzeigerrichtung in jeweils entgegengesetzter Richtung auf der Nabe aufgewickelt ist, während die elektrische Leitung in der Mittelstellung der Nabe von dieser abgewickelt ist.

Gegenüber bekannten Einrichtungen zur Signalübertragung der genannten Art ergibt sich der Vorteil, daß für die notwendige Drehung der Nabe eine geringere Leitungslänge erforderlich ist.

In einer bevorzugten Ausführungsform ist eine erste Kammer für die Aufnahme der auf der Nabe aufgewickelten elektrischen Leitung und eine zweite Kammer für die abgewickelte, schlaufenförmig verlaufende elektrische Leitung vorgesehen. Für eine herkömmliche Anzahl von Umdrehungen bei Lenkspindeln bewegt sich bei der erfindungsgemäßen Einrichtung die Schlaufe der elektrischen Leitung nur um 180°. Dadurch kann das Gehäuse auf der diesem Raum gegenüberliegenden Seite entfallen. Dieser Freiraum kann z.B. in einer Lenkspindel für andere Bauteile genutzt werden.

Zur Realisierung der Kammern ist in einer Ausführungsform zwischen der Nabe und einem feststehenden Gehäuse eine feststehende ringförmige Zwischenwand mit einer Öffnung für die Durchführung der elektrischen Leitung vorgesehen und an der Außenseite der Zwischenwand ist neben der Öffnung ein elektrischer Leitunganschluß vorgesehen. Die erste Kammer wird dann zwischen der Nabe und der Zwischenwand gebildet, während sich die zweite Kammer konzentrisch dazu zwischen dem feststehenden Gehäuse und der Zwischenwand befindet. In den beiden Extremstellungen ist die elektrische Leitung in der ersten Kammer auf der Nabe aufgewickelt, während sie in der Mittelstellung der Nabe als Schlaufe in der zweiten Kammer liegt.

In einer weiteren Ausführungsform ist die zweite Kammer seitlich am feststehenden Gehäuse vorgesehen und am Übergang der ersten in die zweite Kammer ist in dieser der elektrische Leitungsanschluß vorgesehen, der an einem feststehenden Bauteil anzubringen ist. In dieser Ausführungsform ist die erste Kammer der Raum zwischen dem feststehenden Gehäuse und der Nabe. Die zweite Kammer schließt sich der ersten Kammer seitlich an. In der Mittelstellung der Nabe liegt die elektrische Leitung in Schlaufenform in dieser seitlichen zweiten Kammer.

Zur Unterstützung der Ausbildung einer Schlaufe beim Abwickeln der elektrischen Leitung von der Nabe ist es zweckmäßig, in der zweiten Kammer eine Schlaufenführung zur Bestimmung der Laufrichtung der Schlaufe vorzusehen. Als Schlaufenführung kann ein Verbindungsstück zwischen dem feststehenden Gehäuse und der Zwischenwand vorgesehen sein.

In allen Fällen liegt der Umkehrpunkt der Schlaufe in einem Bereich außerhalb der elektrischen Leitunganschlüsse, so daß optimale Abrollverhältnisse für die Schlaufe möglich sind.

Eine weitere zweckmäßige Ausgestaltung der Erfindung sieht vor, daß ein die Schlaufe der elektrischen Leitung permanent auf Zug beanspruchendes Element vorgesehen ist. Damit wird erreicht, daß bei Fehlen eines Drehmomentes an der Nabe diese in ihrer Mittelstellung gehalten wird. Als Zugelement kann z.B. eine Zugfeder vorgesehen sein.

Um die Biegebelastung der elektrischen Leitung bei deren Aufwickeln in unterschiedliche Richtungen zu verringern, ist es zweckmäßig, daß der nabenseitige elektrische Leitungsanschluß drehbar an der Nabe befestigt ist und insbesondere um eine zur Nabenachse parallele Achse drehbar ist.

Aus dem gleichen Grund ist es zweckmäßig, daß auch der elektrische Leitungsanschluß auf dem feststehenden Bauteil drehbar gelagert ist und daß er insbesondere um eine zur Nabenachse parallele Achse drehbar gelagert ist.

Das Gehäuse der erfindungsgemäßen Einrichtung weist in einer Ausführungsform einen kreisringförmigen Querschnitt auf. In einer weiteren Ausführungsform weist das Gehäuse einen kreisringförmigen Querschnitt mit einer an einer Seite auf einer Sehne des Kreises verlaufenden ebenen Wand auf. In dieser letztgenannten Ausführungsform des Gehäuses ist dieses um einen Abschnitt gegenüber dem mit kreisförmigem Querschnitt verkleinert worden, der für das abgewickelte Kabel nicht benötigt wird. Dieser gewonnene Raum kann z. B. bei Anwendung an einer Lenksäule eines Kraftfahrzeuges für den Einbau anderer Bauteile genutzt werden.

Die Erfindung soll in Ausführungsbeispielen anhand von Zeichnungen erläutert werden:

Es zeigen:
- Fig. 1 und 1a: eine erfindungsgemäße Einrichtung in zwei Ausführungsformen mit einer Wand zwischen einer drehbaren Nabe und einem feststehenden Gehäuse wobei sich die Nabe in einer Mittelstellung befindet;
- Fig. 2 und 2a: eine Einrichtung gemäß Fig. 1 und 1a, wobei sich die Nabe nach Drehung entgegen der Uhrzeigerrichtung in ihrer Endlage befindet;
- Fig. 3 und 3a: eine Einrichtung gemäß Fig. 1 und 1a, wobei sich die Nabe nach Drehung in Uhrzeigerrichtung in ihrer Endlage befindet;
- Fig. 4: eine erfindungsgemäße Einrichtung mit einer seitlichen Kammer für die abgewickelte elektrische Leitung;
- Fig. 5 und 5a: zwei Ausführungsformen mit einer zusätzlichen Schlaufenführung, wobei sich die Nabe in ihrer Mittelstellung befindet;
- Fig. 6 und 6a: die Ausführungsformen nach Fig. 5 und 5a, wobei sich die Nabe nach Drehung in Uhrzeigerrichtung in ihrer Endlage befindet;
- Fig. 7 - 9a: Ausführungsformen mit einem drehbaren elektrischen Leitunganschluß an der Nabe in drei unterschiedlichen Drehlagen der Nabe;
- Fig. 10 - 12: eine Ausführungsform mit einem drehbaren elektrischen Leitunganschluß an der Wand zwischen Nabe und Gehäuse.

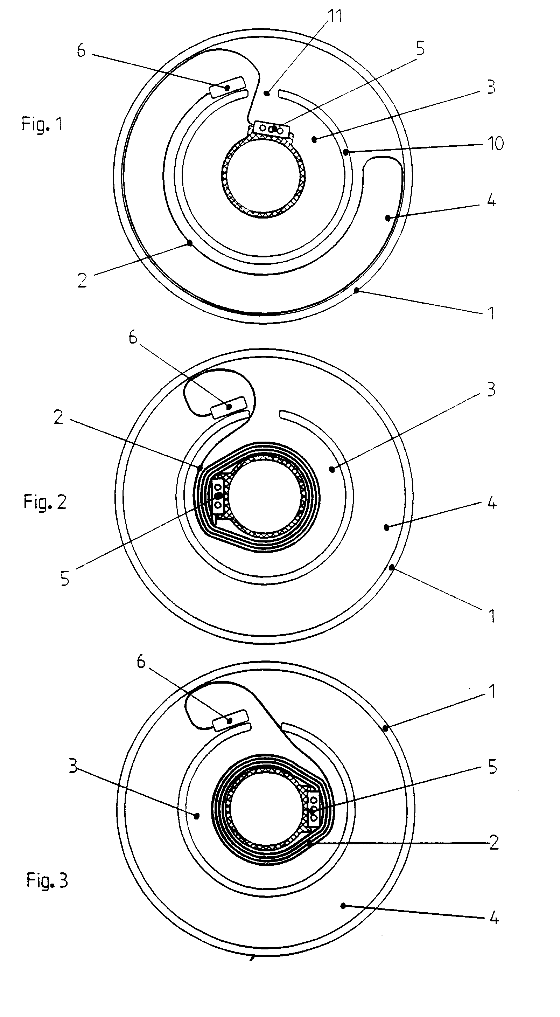

Die in den Figuren 1 bis 3 dargestellte Ausführungsform der erfindungsgemäßen Einrichtung weist ein Gehäuse 1 sowie eine Nabe 9, z. B. eine Lenkradnabe, auf, zwischen denen sich eine elektrische Leitung 2 erstreckt. Zwischen der Nabe 9 und dem Gehäuse 1 verläuft konzentrisch zur Nabe 9 und zum Gehäuse 1 eine feststehende Zwischenwand 10, wodurch eine innere erste Kammer 3 und eine äußere zweite Kammer 4 gebildet werden, die konzentrisch zueinander liegen. Die Zwischenwand 10 weist eine Öffnung 11 auf, durch die die elektrische Leitung 2 geführt ist.

in der Fig. 1 befindet sich die Nabe 9 in einer Mittelstellung. In dieser ist die Leitung 2 vollständig von der Nabe abgewickelt und erstreckt sich durch die Öffnung 11 von einem Leitungsanschluß 5 an der Nabe 9 in die zweite Kammer 4. Die Leitung ist in dieser Kammer als Schlaufe entlang der Wand des Gehäuses 1 und der Zwischenwand 10 zu einem Leitungsanschluß 6 an der feststehenden Zwischenwand geführt. Die Leitungsanschlüsse 5 und 6 liegen in dieser Mittelstellung der Nabe 9 direkt gegenüber.

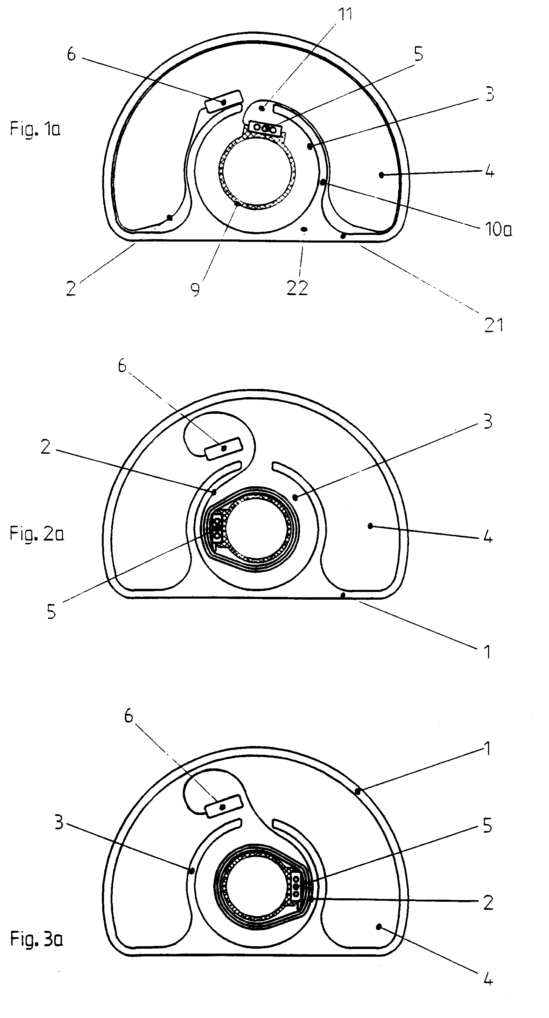

Wird die Nabe entgegen dem Uhrzeigersinn gedreht, wird die Leitung aus der zweiten Kammer heraus in die erste Kammer gezogen und wickelt sich auf der Nabe 9 auf. Die Fig.2 zeigt die Nabe in dieser Drehrichtung in ihrer Endlage . Die Leitung ist nun nahezu vollständig auf der Nabe 9 aufgewickelt.

Beim Drehen der Nabe aus dieser Endlage in Uhrzeigerrichtung wird die Leitung zunächst wieder in Schlaufenform in die zweite Kammer geschoben, bis die Mittelstellung der Fig. 1 erreicht ist. Wird die Nabe weiter in Uhrzeigerrichtung gedreht, wird die Leitung wieder aus der zweiten Kammer herausgezogen und wickelt sich nunmehr in entgegengesetzter Richtung auf der Nabe 9 auf. Die Endlage in dieser Drehrichtung ist in Fig. 3 dargestellt. In dieser Endlage ist die Leitung wieder nahezu vollständig auf der Nabe 9 aufgewickelt.

Der Vorteil dieser Anordnung besteht darin, daß die elektrische Leitung für die mehrfache Drehung der Nabe in Uhrzeigerrichtung und in entgegengesetzter Richtung nur eine minimale Länge erfordert, so daß die Leitung im abgewickelten Zustand nach Fig. 1 nur einen Teil der zweiten Kammer benötigt. Der in Fig. 1 nicht benutzte Raum der zweiten Kammer könnte deshalb abgeteilt werden und für andere Bauteile benutzt werden. Eine Ausführungsform mit einem entsprechend verkleinerten Gehäuse zeigen die Figuren 1a bis 3a.

Im Ausführungsbeispiel der Figur 1a ist ein Gehäuse 21 vorgesehen, das im wesentlichen wie in den Figuren 1 bis 3 einen kreiszylindrischen Querschnitt aufweist, der an einer Seite aber abgeflacht ist, so daß eine ebene Wand 22 vorliegt. Von dieser aus erstreckt sich auch die Zwischenwand 10a in Richtung der Nabe 9. Die erste Kammer 3 wird deshalb im Unterschied zum Ausführungsbeispiel der Figuren 1 bis 3 nicht nur von der Zwischenwand sondern von der Zwischenwand 10a und der ebenen Wand 22 als Teil des Gehäuses gebildet. Der gegenüber der Ausführungsform der Figuren 1 bis 3 durch die Abflachung des Zylinderquerschnittes neben der ebenen Wand 22 entstandene frei Raum kann für die Unterbringung anderer Bauteile genutzt werden. Die Figuren 2a und 3a zeigen analog zu den Figuren 2 und 3 die Nabe 9 in beiden Drehrichtungen in ihrer Endlage.

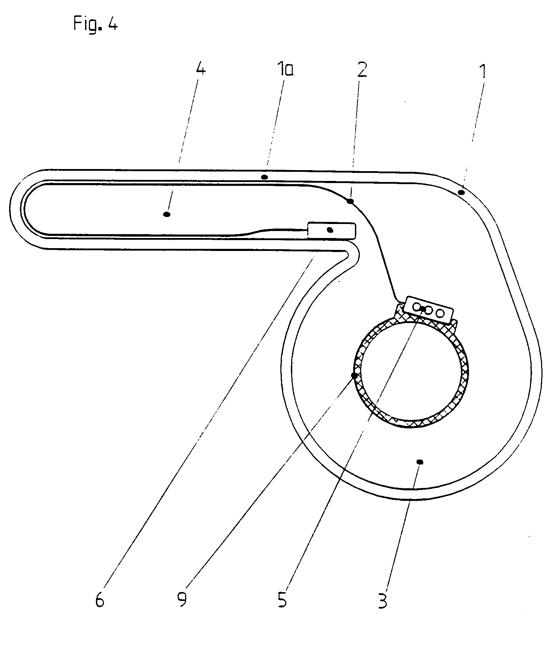

Bei dem Ausführungsbeispiel der Fig. 4 weist das Gehäuse 1 einen seitlichen Ansatz 1a auf, der die zweite Kammer 4 einschließt. Die ersten Kammer 3 erstreckt sich in diesem Ausführungsbeispiel zwischen der Nabe 9 und dem Gehäuse 1. Der Leitungsanschluß 6 befindet sich im Ansatz 1a am Übergang zur ersten Kammer 3. Die Fig. 4 zeigt wieder die Mittelstellung der Nabe, in der die Leitung von der Nabe abgewickelt ist und sich als Schlaufe in der zweiten Kammer befindet.

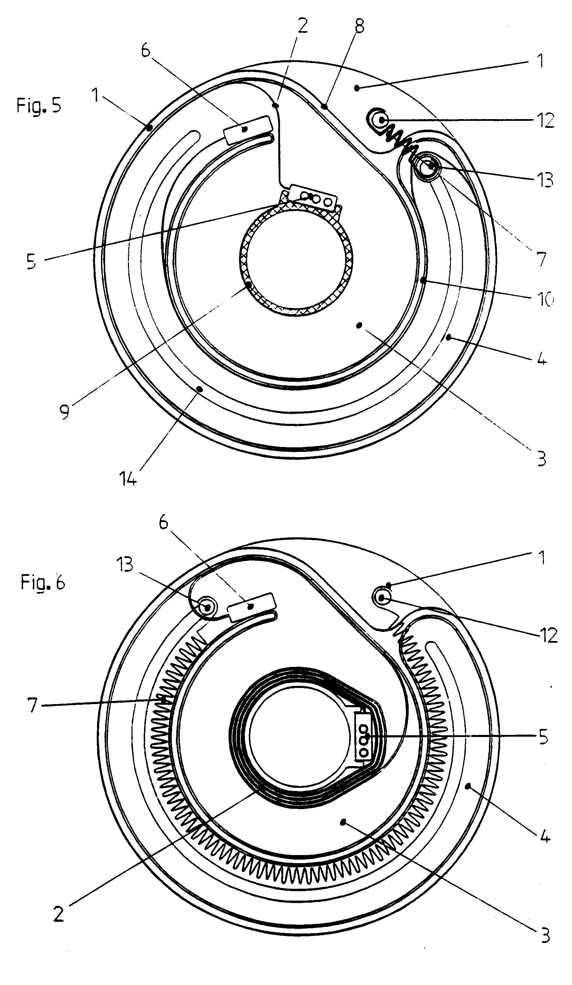

Beim Ausführungsbeispiel der Fig. 5 ist eine Zwischenwand 10 vorgesehen, die mit einer Schlaufenführung versehen ist. Als Schlaufenführung dient ein Verbindungsstück 8 zwischen dem Gehäuse 1 und der Zwischenwand 10. Durch dieses Verbindungsstück 8 wird die Führung der Schlaufe in der zweiten Kammer weiter verbessert. Weiterhin ist in dieser Ausführungsform eine Zugfeder 7 vorgesehen, die bestrebt ist, die Schlaufe in der zweiten Kammer in ihrer Endlage und dadurch die Nabe 9 in ihrer Mittelstellung zu halten. Die Zugfeder ist an zwei Bolzen 12, 13 befestigt. Während der Bolzen 12 fest im Gehäuse angeordnet ist, kann sich der Bolzen 13 innerhalb der zweiten Kammer 4 entlang einer Führungsbahn 14 bewegen.

In der Fig. 5 ist die Nabe 9 in ihrer Mittelstellung dargestellt, in der sich die Leitung nahezu vollständig in Schlaufenform in der zweiten Kammer 4 befindet. Diese Mittelstellung wird durch die nahezu entspannte Zugfeder 7 fixiert, die hier vereinfacht dargestellt ist. Bei Drehung der Nabe 9 im Uhrzeigersinn oder entgegen dem Uhrzeigersinn wird die Leitung aus der Kammer 4 herausgezogen und wickelt sich, wie in Fig. 6 für die Drehung im Uhrzeigersinn dargestellt, auf der Nabe 9 auf. Dabei nimmt die Schlaufe den Bolzen 13 mit, wodurch die Zugfeder 7 gespannt wird. Durch die gespannte Zugfeder wird das Rückkehren der Nabe in die Mittelstellung unterstützt, in der sich die Zugfeder wieder in der in Fig. 5 dargestellten Lage befindet.

Eine abgewandelte Ausführungsform der Figuren 5 und 6 zeigen die Figuren 5a und 6a. Bei dieser Ausführungsform ist ähnlich wie beim Ausführungsbeispiel der Figuren 1a bis 3a ein Gehäuse mit einem an einer Seite abgeflachten Kreiszylinder-Querschnitt vorgesehen. An dieser Seite bildet das Verbindungstück 8 zwischen dem Gehäuse 1 und der Zwischenwand 10 gleichzeitig die Gehäusewand.

Die Fig. 6a zeigt in vereinfachter Darstellung die Nabe 9 in ihrer Endlage bei Drehung in Uhrzeigerrichtung.

Wie insbesondere aus den Figuren 1 bis 3 ersichtlich ist, legt sich die Leitung bei Drehung der Nabe 9 im Uhrzeigersinn am Leitungsanschluß 5 unmittelbar von der Anschlußstelle aus in tangentialer Richtung an die Nabe an. Bei Drehung der Nabe 9 entgegen dem Uhrzeigersinn wird die Leitung zunächst um ca. 180° umgelenkt und legt sich dann erst an die Nabe an. Am Leitungsanschluß 6 wird bei der Ausführungsform der Figuren 1 bis 3 die Leitung bei auf der Nabe 9 aufgewickelter Leitung in beiden Drehrichtungen von der Anschlußstelle um 180° umgelenkt. Die Leitung wird an den Leitungsanschlüssen 5 und 6 in diesen Fällen zusätzlich auf Biegung beansprucht.

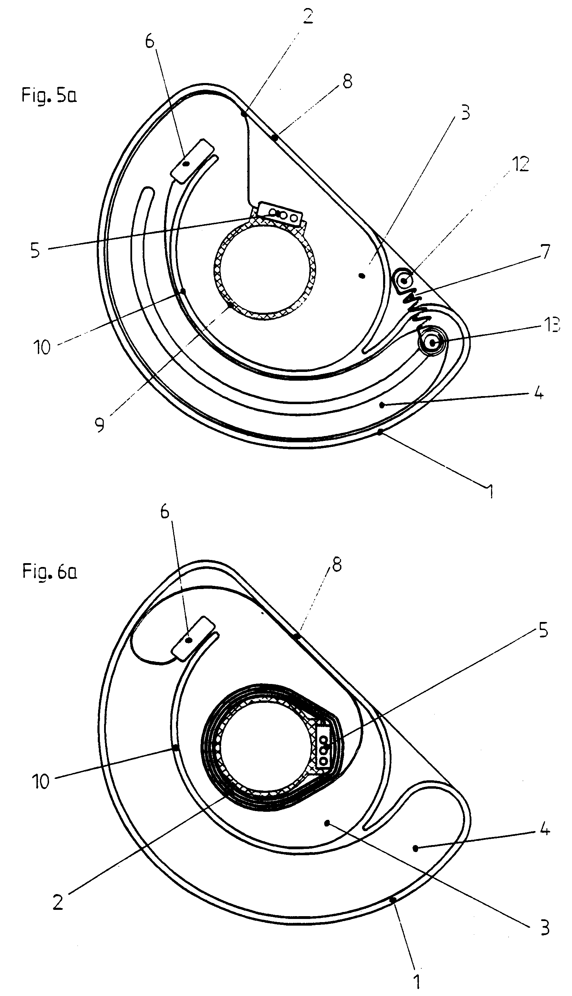

Um zu erreichen, daß die Leitungen an den Leitungsanschlüssen 5 und 6 im wesentlichen nur auf Zug beansprucht werden, ist im Ausführungsbeispiel der Figuren 7 bis 9 der Leitungsanschluß 5a drehbar ausgeführt und im Ausführungsbeispiel der Figuren 10 bis 12 ist der Leitungsanschluß 6a drehbar ausgeführt.

Aus der Fig. 7 ist ersichtlich, daß zu Beginn der Drehung der Nabe 9 im Uhrzeigersinn der Leitungsanschluß 5a, der um eine Achse parallel zur Nabenachse drehbar ist, durch die Leitung 2 in eine linke Stellung gedreht wird, in der auf die Leitung an der Anschlußstelle im wesentlichen nur noch Zugkräfte wirken, da sich die Leitung am Anschluß tangential an die Nabe anlegt.

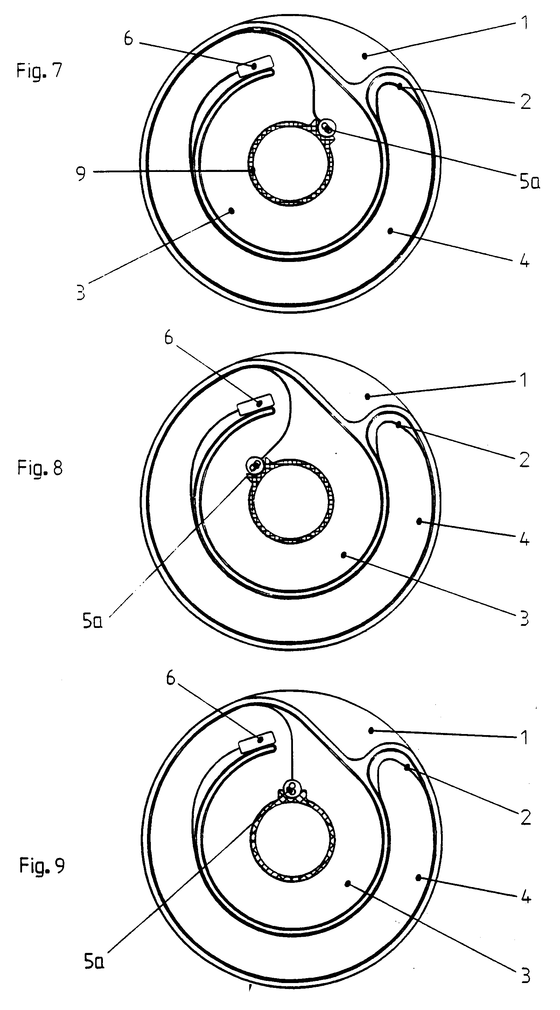

Die Fig. 8 zeigt, daß zu Beginn der Drehung der Nabe entgegen dem Uhrzeigersinn der Leitungsanschluß 5 durch die Leitung 9 in eine rechte Stellung gedreht wird, so daß auch in dieser Drehrichtung auf die Leitung an der Anschlußstelle wegen des tangentialen Anlegens an die Nabe im wesentlichen nur noch Zugkräfte wirken.

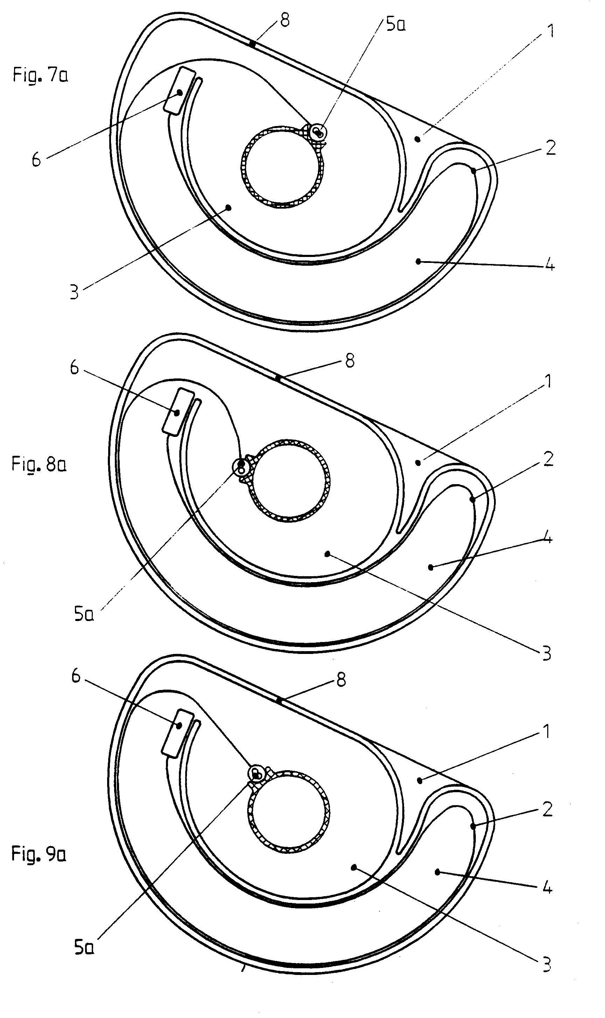

In der in Fig. 9 gezeigten Mittelstellung nimmt auch der Leitungsanschluß 5a eine Mittelstellung ein, so daß die Leitung ohne abgebogen zu werden aus dem Leitungsanschluß austritt.

In den Figuren 7a bis 9a ist der drehbare Leitungsanschluß 5a auch für einen kreisförmigen Gehäusequerschnitt mit ebenem Wandteil dargestellt.

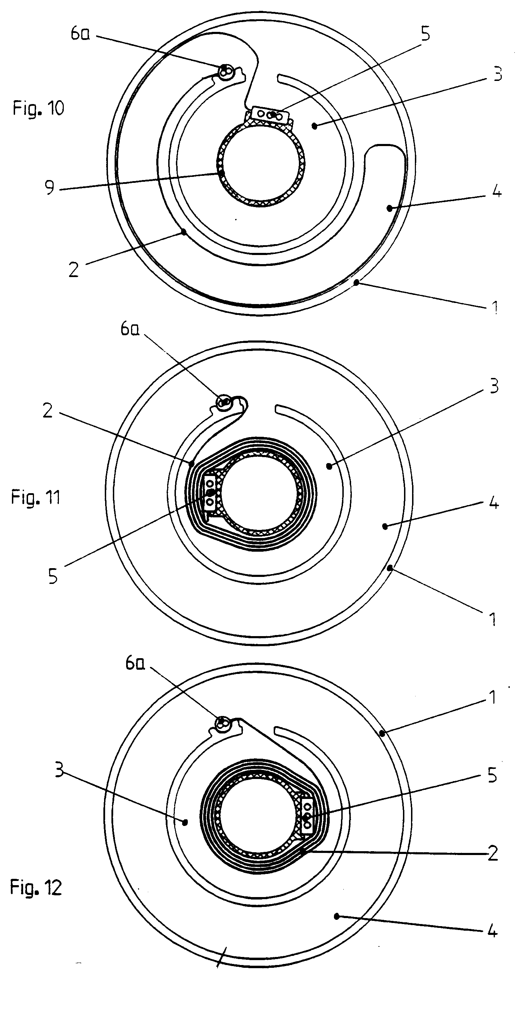

In den Figuren 10 bis 12 ist die Stellung des drehbaren Leitungsanschlusses 6a für verschiedene Nabenstellungen dargestellt. Die Fig. 10 zeigt die Mittelstellung der Nabe, in der die Leitungsführung am Leitungsanschluß 6a der Leitungsführung am Leitungsanschluß 6 der Fig. 1 entspricht. Bei der in Fig. 11 dargestellten Endlage der Nabe bei deren Drehung entgegen dem Uhrzeigersinn ist der Leitungsanschluß um 180° gedreht, so daß die Leitung nur um 180° umgebogen wird, während sie in der vergleichbaren Lage der Fig. 2 um ca. 360° umgebogen werden muß, um an der Nabe anzuliegen.

In der in Fig. 12 dargestellten Endlage der Nabe 9 bei deren Drehung im Uhrzeigersinn weist der Leitungsanschluß dieselbe Lage wie in der Fig. 11 auf. Es ist ersichtlich, daß die Leitung in dieser Lage am Leitungsanschluß im wesentlichen nur noch auf Zug beansprucht wird.

Der Vorteil der Ausführungsformen nach den Figuren 7 bis 12 besteht neben der weiteren Verringerung der Beanspruchung der Leitungen in der weiteren Verkürzung der Leitungen für einen vorgegebenen Drehbereich der Nabe.

## Patentansprüche

1. Einrichtung zur Übertragung elektrischer Signale zwischen relativ gegeneinander drehbaren Bauteilen, insbesondere bei Lenkeinrichtungen für Kraftfahrzeuge, mit einer drehbaren Nabe **(9)**, die von einem feststehenden Gehäuse **(1)** umgeben ist, und mit mindestens einer elektrischen Leitung **(2)**, die an ihrem einen Ende mit der drehbaren Nabe **(9)** verbunden ist und deren anderes Ende mit einem feststehenden Bauteil verbunden ist,
**dadurch gekennzeichnet,**
daß die elektrischen Leitungsanschlüsse **(5, 6)** und die Führung **(10,11)** der elektrischen Leitung (2) so ausgebildet sind, daß die elektrische Leitung (2) in den beiden Endlagen der Nabe **(9)** bei Drehung der Nabe (9) in Uhrzeigerrichtung bzw. entgegen der Uhrzeigerrichtung in jeweils entgegengesetzter Richtung auf der Nabe (9) aufgewickelt ist, während die elektrische Leitung (2) in der Mittelstellung der Nabe (9) von dieser abgewickelt ist.

2. Einrichtung nach Anspruch 1, **dadurch gekennzeichnet,** daß eine erste Kammer (3) für die Aufnahme der auf der Nabe (9) aufgewickelten elektrischen Leitung (2) und eine zweite Kammer (4) für die abgewickelte, schlaufenförmig verlaufende elektrische Leitung (2) vorgesehen sind.

3. Einrichtung nach Anspruch 1 oder 2, **dadurch gekennzeichnet,** daß zwischen der Nabe (9) und einem feststehenden Gehäuse (1) eine feststehende ringförmige Zwischenwand (10, 10a) mit einer Öffnung (11) für die Durchführung der elektrischen Leitung (2) vorgesehen ist und daß an der Außenseite der Zwischenwand (10, 10a) neben der Öffnung (11) ein elektrischer Leitunganschluß (6) vorgesehen ist.

4. Einrichtung nach mindestens einem der vorhergehenden Ansprüche, **dadurch gekennzeichnet,** daß die zweite Kammer (4) zwischen dem feststehenden Gehäuse (1) und der Zwischenwand (10) vorgesehen ist.

5. Einrichtung nach mindestens einem der vorhergehenden Ansprüche, **dadurch gekennzeichnet,** daß die zweite Kammer (4) seitlich am feststehenden Gehäuse (1) vorgesehen ist und daß am Übergang der ersten **(3)** in die zweite Kammer **(4)** in dieser ein elektrischer Leitungsanschluß (6) vorgesehen ist.

6. Einrichtung nach mindestens einem der vorhergehenden Ansprüche, **dadurch gekennzeichnet,** daß in der zweiten Kammer (4) eine Schlaufenführung **(8)** zur Bestimmung der Laufrichtung der Schlaufe der elektrischen Leitung (2) vorgesehen ist.

7. Einrichtung nach Anspruch 6, **dadurch gekennzeichnet,** daß als Schlaufenführung ein Verbindungsstück (8) zwischen dem feststehenden Gehäuse (1) und der Zwischenwand (10) vorgesehen ist.

8. Einrichtung nach mindestens einem der vorhergehenden Ansprüche, **dadurch gekennzeichnet,** daß ein die Schlaufe der elektrischen Leitung (2) permanent auf Zug beanspruchendes Element **(7)** vorgesehen ist.

9. Einrichtung nach Anspruch 8, **dadurch gekennzeichnet,** daß zwischen dem feststehenden Gehäuse (1) und der Schlaufe der elektrischen Leitung (2) eine Zugfeder (7) angeordnet ist.

10. Einrichtung nach mindestens einem der vorhergehenden Ansprüche, **dadurch gekennzeichnet,** daß der nabenseitige elektrische Leitungsanschluß (5a) drehbar an der Nabe (9) befestigt ist.

11. Einrichtung nach Anspruch 10, **dadurch gekennzeichnet,** daß der elektrische Leitunganschluß (5a) auf der Nabe (9) um eine zur Nabenachse parallele Achse drehbar ist.

12. Einrichtung nach mindestens einem der vorhergehenden Ansprüche, **dadurch gekennzeichnet,** daß der elektrische Leitungsanschluß (6a) auf dem feststehenden Bauteil drehbar gelagert ist.

13. Einrichtung nach Anspruch 12, **dadurch gekennzeichnet,** daß der elektrische Leitunganschluß (6a) auf dem feststehenden Bauteil **(10)** um eine zur Nabenachse parallele Achse drehbar gelagert ist.

14. Einrichtung nach mindestens einem der vorhergehenden Ansprüche, **dadurch gekennzeichnet,** daß das Gehäuse (1) einen kreisringförmigen Querschnitt aufweist.

15. Einrichtung nach mindestens einem der vorhergehenden Ansprüche, **dadurch gekennzeichnet,** daß das Gehäuse (21) einen kreisringförmigen Querschnitt mit an einer Seite auf einer Sehne des Kreises verlaufenden ebenen Wand (22) aufweist.

## Claims

1. Device for transmitting electrical signals between component parts which are rotatable relative to each other, more particularly in the case of steering systems for motor vehicles, with a rotatable hub (9) which is enclosed by a fixed housing (1) , and with at least one electric lead (2) which is connected at one end to the rotatable hub (9) and whose other end is connected to a fixed component part, characterised in that the electrical lead connections (5, 6) and the guide (10, 11) of the electric lead (2) are formed so that the electric lead (2) in both end positions of the hub (9) during rotation of the hub in the clockwise and anti-clockwise directions is each time wound up in the relevant opposite direction on the hub (9) whilst the electric lead (2) in the middle position of the hub (9) is unwound from same.

2. Device according to claim 1 characterised in that a first chamber (3) is provided for holding the electric lead (2) wound up on the hub (9) and a second chamber (4) is provided for the unwound electric lead (2) which runs in a loop.

3. Device according to claim 1 or 2 characterised in that a fixed ring-shape partition wall (10, 10a) with opening (11) for passing through the electric lead (2) is provided between the hub (9) and a fixed housing (1) and that an electric lead connection (6) is provided on the outside of the partition wall (10, 10a) next to the opening (11).

4. Device according to at least one of the preceding claims characterised in that the second chamber (4) is provided between the fixed housing (1) and the partition wall (10).

5. Device according to at least one of the preceding claims, characterised in that the second chamber (4) is provided at the side on the fixed housing (1) and that an electric lead connection (6) is provided at the transition between the first chamber (3) and the second chamber (4) in the latter.

6. Device according to at least one of the preceding claims, characterised in that a loop guide (8) is provided in the second chamber (4) for determining the running direction of the loop of the electric lead (2).

7. Device according to claim 6 characterised in that a connector piece (8) between the fixed housing (1) and the partition wall (10) is provided as loop guide.

8. Device according to at least one of the preceding claims characterised in that an element (7) is provided to pull permanently on the loop of the electric lead (2).

9. Device according to claim 8 characterised in that a tensile spring (7) is mounted between the fixed housing (1) and the loop of the electric lead (2).

10. Device according to at least one of the preceding claims, characterised in that the electric lead connection (5a) on the hub side is fixed rotatable on the hub (9).

11. Device according to claim 10 characterised in that the electric lead connection (5a) on the hub (9) is rotatable about an axis parallel to the hub axis.

12. Device according to at least one of the preceding claims characterised in that the electric lead connection (6a) on the fixed component part is mounted rotatable.

13. Device according to claim 12 characterised in that the electric lead connection (6a) on the fixed component part (10) is mounted rotatable about an axis parallel to the hub axis.

14. Device according to at least one of the preceding claims, characterised in that the housing (1) has a circular ring-shaped cross-section.

15. Device according to at least one of the preceding claims characterised in that the housing (21) has a circular ring-shaped cross-section with flat wall (22) running on one side on a chord of the circle.

## Revendications

1. Dispositif pour transmettre des signaux électriques entre des composants, qui peuvent tourner les uns par rapport aux autres, notamment dans le cas de dispositifs de direction pour des véhicules automobiles, comportant un moyeu pouvant tourner (9), qui est entouré par un boitier fixe (1), et comportant au moins un conducteur électrique (2), qui est relié, par l'une de ses extrémités, au moyeu pouvant tourner (9) et dont l'autre extrémité est reliée à un composant fixe,
caractérisé en ce
que les bornes électriques (5, 6) et les guides (10, 11) du conducteur électrique (2) sont agencés de telle sorte que le conducteur électrique (2) est enroulé dans des directions respectivement opposées sur le moyeu (9), dans les deux positions d'extrémité du moyeu (9), lors d'une rotation de ce moyeu (9) dans le sens des aiguilles d'une montre et en sens inverse des aiguilles d'une montre, tandis que le conducteur électrique (2) est déroulé du moyeu (9) lorsque ce dernier est dans sa position médiane.

2. Dispositif selon la revendication 1, caractérisé en ce qu'il est prévu une première chambre (3) pour loger le conducteur électrique (2) enroulé sur le moyeu (9) et une seconde chambre (4) pour le conducteur électrique (2) déroulé, qui s'étend sous la forme d'une boucle.

3. Dispositif selon la revendication 1 ou 2, caractérisé en ce qu'entre le moyeu (9) et un boîtier fixe (1) est fixée une paroi intercalaire annulaire fixe (10, 10a) comportant une ouverture (11) pour le passage du conducteur électrique (2) et qu'une borne électrique (6) du conducteur est prévue sur la face extérieure de la paroi intercalaire (10, 10a) à côté de l'ouverture (11).

4. Dispositif selon au moins l'une des revendications précédentes, caractérisé en ce que la seconde chambre (4) est prévue entre le boitier fixe (1) et la paroi intercalaire (10).

5. Dispositif selon au moins l'une des revendications précédentes, caractérisé en ce que la seconde chambre (4) est prévue latéralement sur le boitier fixe (1) et qu'une borne électrique (6) du conducteur est prévue dans la seconde chambre (4), au niveau de la jonction entre la première chambre (3) et cette seconde chambre.

6. Dispositif selon au moins l'une des revendications précédentes, caractérisé en ce que dans la seconde chambre (4) est prévu un guide de boucle (8) servant à déterminer le sens dans lequel s'étend la boucle du conducteur électrique (2).

7. Dispositif selon la revendication 6, caractérisé en ce qu'il est prévu comme guide de boucle, un élément de liaison (8) entre le boitier fixe (1) et la paroi intercalaire (10).

8. Dispositif selon au moins l'une des revendications précédentes, caractérisé en ce qu'il est prévu un élément (7) qui sollicite en permanence en traction la boucle du conducteur électrique (2).

9. Dispositif selon la revendication 8, caractérisé en ce qu'un ressort de traction (7) est disposé entre le boitier fixe (1) et la boucle du conducteur électrique (2).

10. Dispositif selon au moins l'une des revendications précédentes, caractérisé en ce que la borne électrique (5a) du conducteur, située du côté du moyeu, est fixée de manière à pouvoir tourner sur le moyeu (9).

11. Dispositif selon la revendication 10, caractérisé en ce que la borne électrique (5a) du conducteur peut tourner sur le moyeu (9) autour d'un axe parallèle à l'axe du moyeu.

12. Dispositif selon au moins l'une des revendications précédentes, caractérisé en ce que la borne électrique (6a) du conducteur est montée de manière à pouvoir tourner sur le composant fixe.

13. Dispositif selon la revendication 12, caractérisé en ce que la borne électrique (6a) de conducteur est montée de manière à pouvoir tourner sur le composant fixe (10) autour d'un axe parallèle à l'axe du moyeu.

14. Dispositif selon au moins l'une des revendications précédentes, caractérisé en ce que le boîtier (1) possède une section transversale en forme d'anneau circulaire.

15. Dispositif selon au moins l'une des revendications précédentes, caractérisé en ce que le boîtier (21) possède une section transversale en forme d'anneau circulaire comportant une paroi plane (22) qui s'étend d'un côté suivant une corde du cercle.
